# EUROPEAN PATENT SPECIFICATION

(11) **EP 2 427 579 B1**
(45) Date of publication and mention of the grant of the patent: **13.03.2013**
(21) Application number: 10710841.7
(22) Date of filing: 23.03.2010
(51) Int. Cl.: C21B 7/20, F27B 1/20, F27D 3/10

(54) **A SHAFT FURNACE CHARGING INSTALLATION HAVING A DRIVE MECHANISM FOR A DISTRIBUTION CHUTE**
HOCHOFENBESCHICKUNGSANLAGE MIT ANTRIEBSMECHANISMUS FÜR EINE VERTEILERSCHURRE
INSTALLATION DE CHARGEMENT DE FOURNEAU À CUVE AYANT UN MÉCANISME D'ENTRAÎNEMENT D'UNE GOULOTTE DE DISTRIBUTION

(30) Priority: 07.05.2009 LU 91565
(43) Date of publication of application: 14.03.2012
(73) Proprietor: Paul Wurth S.A., 1122 Luxembourg (LU)
(72) Inventor: THILLEN, Guy, L-9234 Diekirch (LU); LONARDI, Emile, L-4945 Bascharage (LU); THIX, Christian, Benoît, L-1537 Luxembourg (LU); HUBEAUX, Gérald, L-1880 Luxembourg (LU)
(74) Representative: Office Freylinger
(86) International application number: PCT/EP2010/053792
(87) International publication number: WO 2010/127904

(56) References cited:
- US-A- 3 814 403

## Description

### Technical field

The present invention generally relates to a charging installation for a shaft furnace, especially for a blast furnace. More specifically, it relates to a drive mechanism that is used in this type of charging installation to operate a distribution chute for distributing bulk charge material inside the furnace.

### Background Art

A charging installation for a shaft furnace with a drive mechanism for a rotary and pivotable distribution chute is described in US Patent 3,814,403. This drive mechanism has a rotary supporting means that is supported by a fixed structure and capable of supporting the distribution chute. It includes a main drive motor and an auxiliary drive motor for respectively imparting rotation about a vertical axis to the rotary supporting means and pivotal movement about a horizontal axis to the distribution chute. For imparting rotation to the rotary support, first transmission means operationally couple the main drive motor to a first ring gear that is rigidly connected to the rotary support. An independently rotatable second ring gear is mounted on the rotary support and operationally coupled to the auxiliary drive motor by second transmission means. Third transmission means, which are supported by said rotary support, are operationally coupling the second ring gear to the distribution chute for adjusting the pivotal position of the latter. In the drive mechanism of US Patent 3,814,403 an epicyclic sun-and-planet gear train, colloquially called planetary gear, forms part of the second transmission means that operationally couples the auxiliary drive motor to the second ring gear. Together with the drive motors, the epicyclic sun-and-planet gear train is thus supported by the fixed structure. The sun-and-planet gear train ensures identical speeds of rotation of the second ring gear and the rotary support by sole action of the main drive motor, i.e. without the need to operate the auxiliary drive motor, while enabling a differential rotation between the second ring gear and the rotary support to be produced by operating the auxiliary drive motor.

With a charging installation as generally described in US Patent 3,814,403, it is possible to direct bulk material (burden) to virtually any point of the charging surface (stockline) by rotating the chute about the vertical furnace axis and by varying the pivotal inclination of the chute about the horizontal axis. Besides other advantages, the above type of charging installation thus enables a wide variety of charging profiles due to its versatility in distributing the burden on the charging surface. As a result, charging installations of this type have found widespread use in industry during the last decades.

In view of its heavy-duty and long-term use during a furnace campaign, the drive mechanism of the charging installation requires very reliable and wear-resistant parts, especially as regards the epicyclic sun-and-planet gear train, which is a key component of the mechanism. Since the drive mechanism accounts for a significant portion of the total cost of the charging installation, there is a desire for a solution that enables cost savings by putting less stringent requirements on the drive mechanism in general and on the epicyclic sun-and-planet gear train in particular.

### Technical problem

Accordingly, it is a first object of the present invention to provide a drive mechanism for a shaft furnace charging installation, which is configured so that it is subjected to less stringent requirements as regards its component parts.

### General Description of the Invention

The present invention generally concerns a shaft furnace charging installation having a drive mechanism for a distribution chute, typically for a rotary and pivotable distribution chute. More specifically, this drive mechanism comprises rotary supporting means for supporting the distribution chute so that the latter can be rotated, typically about a vertical axis of rotation, and a fixed structure for rotatably supporting these rotary supporting means. It further comprises a main drive motor, used for rotating the chute, and an auxiliary drive motor, used for adjusting the position of the chute, typically the pivotal position about a horizontal axis, relative to the rotary supporting means. Both motors are mounted on the fixed structure. The drive mechanism further comprises first, second and third transmission means. The first transmission operationally couples the main drive motor to a first ring gear rigidly connected to the rotary supporting means for imparting rotational motion to the rotary supporting means about an axis of rotation, typically the vertical central axis of the shaft furnace. The second transmission operationally couples the auxiliary drive motor to a second ring gear that is independently rotatable about the axis of rotation. The third transmission is supported by the rotary supporting means and operationally couples the second ring gear to the distribution chute for adjusting the position of the distribution chute, typically the pivotal position about a horizontal axis.

To achieve its first object, the present invention proposes that the third transmission means comprise at least one epicyclic sun-and-planet gear train that is supported by the rotary supporting means and that is operationally coupled to a third ring gear rigidly connected to the fixed structure. The proposed epicyclic sun-and-planet gear train has an input shaft arranged to be driven by the second ring gear and an output shaft arranged to adjust the position of the distribution chute.

By virtue of the proposed configuration, in which the sun-and-planet gear forms part of the rotary supporting means, the overall wear off of certain mechanism components is reduced. This applies in particular to the components of the one or more epicyclic sun-and-planet gear trains themselves. Accordingly, a design with less stringent requirements as to wear-resistance is achieved. Moreover, the proposed configuration allows savings in terms of constructional space, since the sun-and-planet gear no longer needs to be arranged on top of the fixed structure. Furthermore, in case the second ring gear is rotatably supported on a stationary cylindrical support attached to the fixed structure, the rolling bearing required for the independently rotatable second ring gear is under load and in rotation only when the position of the chute is changed through the second and third transmissions by means of the auxiliary motor.

According to a preferred embodiment, the sun-and-planet gear train comprises a planet gear carrier that meshes with the third ring gear. In the latter case, it is further preferred for constructional reasons, that the annulus be rigidly connected to the input shaft to be driven by the latter and the sun gear be rigidly connected to the output shaft to drive the latter. This configuration enables practical gear ratios at the level of the second ring gear and the planet carrier. In order to simplify setting the gear ratio at the level of the second ring gear by selection of a readily available gearwheel design, the input shaft is preferably connected to an input gearwheel that meshes with the second ring gear. Advantageously, the gear ratio between the input gearwheel and the second ring gear and the gear ratio between the planet gear carrier and the third ring gear are used as variable design parameters so that a readily available design of planetary gear can be used to put the invention into practice. In this case, these gear ratios can easily be selected such that the sun gear remains motionless, i.e. stationary with respect to the rotary supporting means if the latter rotates while the second ring gear remains stationary with respect to the fixed structure.

In one embodiment of the invention, a pair of oppositely arranged pivotable mounting means are arranged on the rotary supporting means and configured to pivotally support the distribution chute for pivoting the distribution chute about a pivoting axis that is perpendicular to the axis of rotation of the rotary supporting means. In a preferred configuration of this embodiment, two planetary gear trains are supported by the rotary supporting means, the output shaft of each sun-and-planet gear train being operationally coupled to either of the pivotable mounting means. Using two smaller planetary gears dimensioned for half the normal load allows further cost savings. Preferably, the output shaft of each sun-and-planet gear train is operationally coupled to either of the pivotable mounting means by means of a self-blocking gear arrangement so that the chute maintains its pivoting position when the output shaft of the planetary gear is not transmitting torque.

In another embodiment of the invention, the mechanism includes an angular drive arrangement that comprises a single drive shaft and a crank and connecting rod mechanism with two opposite control levers for pivoting the distribution chute about its pivoting axis. This type of angular drive arrangement is configured to convert rotation of a single drive shaft into a pivoting movement of a distribution chute with two lateral suspensions. Accordingly, in the latter embodiment, a single sun-and-planet gear train, which is supported by the rotary supporting means and the output shaft of which is operationally coupled the single drive shaft, can be used.

Preferably, the second transmission means comprise a self-blocking gear arrangement in the gear train between the auxiliary drive motor and the second ring gear so that the second ring gear remains stationary with respect to the fixed structure when the auxiliary drive motor is not in operation. Furthermore, in case a stationary cylindrical support, which extends around the rotary supporting means, is provided for rotatably supporting the second ring gear, the third ring gear is preferably rigidly connected to such stationary support.

As will be understood, the proposed type of drive mechanism is industrially applicable in many types of shaft furnace charging installations, and especially in charging installations for metallurgical blast furnaces.

### Brief Description of the Drawings

Further details and advantages of the present invention will be apparent from the following detailed description of several not limiting embodiments with reference to the attached drawings, wherein:
FIG.1 is a schematic view composed of two partial cross-sections along perpendicular vertical planes of a shaft furnace charging installation equipped with a first embodiment of the drive mechanism according to the present invention.
FIG.2 is a schematic view composed of two partial cross-sections along perpendicular vertical planes of a shaft furnace charging installation equipped with a second embodiment of the drive mechanism according to the present invention;
FIG.3 is a schematic view of a partial cross-section along a vertical plane of a shaft furnace charging installation equipped with a third embodiment of the drive mechanism according to the present invention;
FIG.4 is a schematic view of a partial cross-section along a vertical plane of a shaft furnace charging installation equipped with a fourth embodiment of the drive mechanism according to the present invention.
Throughout these drawings, identical reference signs are used to identify identical or similar parts.

### Description of Preferred Embodiments

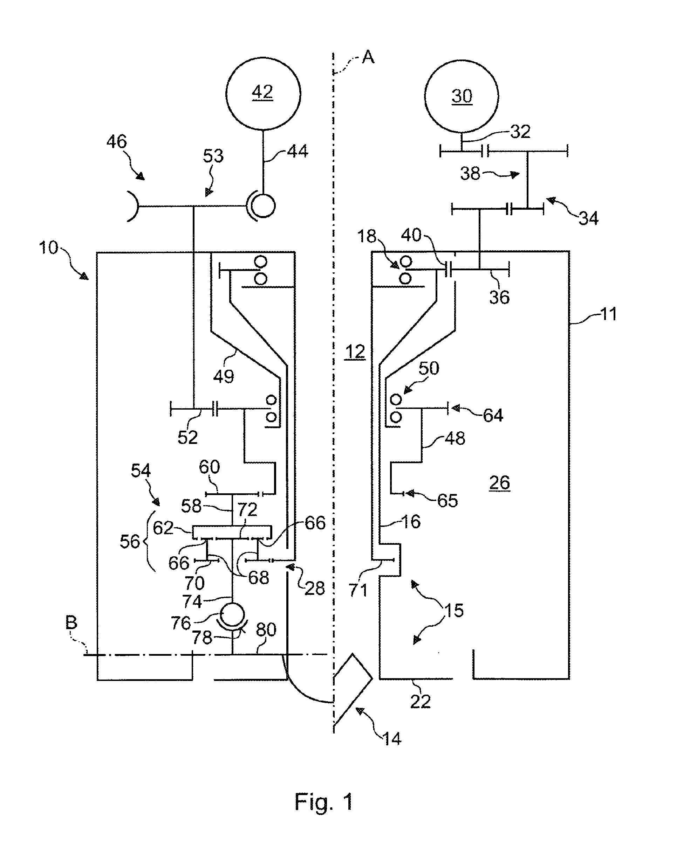

FIG.1 schematically illustrates a first embodiment of the drive mechanism according to the present invention. This drive mechanism is part of a shaft furnace charging installation, e.g. of the type as generally known from US Patent 3,693,812. FIG.1 corresponds to a view composed of two cross-sections taken along perpendicular vertical planes that intersect in the furnace central axis A. The drive mechanism comprises a fixed structure 10 having a fixed external casing 11. The fixed structure 10 is provided with a vertical inner feeding spout 12 through which bulk material can pass into the furnace. Accordingly, the fixed structure 10 is intended to be mounted on the throat of a shaft furnace, in particular a blast furnace, in such a way that the feeding spout 12 is substantially coaxial with the vertical central axis A of the furnace. The drive mechanism is intended to rotate and pivot a distribution chute, only partially and schematically shown at 14, which is arranged below the feeding spout 12 in order to distribute bulk material circumferentially and radially into the furnace in a manner known per se.

The fixed structure 10 supports rotary supporting means 15 comprising a rotary cylindrical body 16 by means of a first rolling bearing 18. The first rolling bearing 18 supports the rotary cylindrical body 16 in such a way that it can rotate about the central axis A. A disc-shaped protection flange 22 is attached to the lower end of the rotary cylindrical body 16. The rotary cylindrical body 16 and the protection flange 22 together with the fixed external casing 11 form a housing delimiting an inner chamber 26 from the blast furnace atmosphere for protecting drive mechanism components. The distribution chute 14 is pivotally supported on the rotary supporting means 15 so that the distribution chute 14 can tilt about a horizontal pivoting axis B. Accordingly, circumferential distribution of bulk material is achieved by rotating the rotary supporting means 15 about axis A, whereas radial distribution is achieved by pivoting the distribution chute 14 about axis B.

A main drive motor 30 is mounted on the fixed structure 10 for imparting rotational movement to the rotary supporting means 15. The main drive motor 30 has a main output shaft 32, which is operationally coupled to the rotary supporting means 15 via first transmission means 34. The first transmission means 34 comprise a first drive gearwheel 36 coupled to the main output shaft 32 via a first reduction gear 38. The first drive gearwheel 36 meshes with external teeth of an annular first ring gear 40 that is rigidly fixed on the rotary cylindrical body 16. Accordingly, rotation of the distribution chute 14 about the central axis A is controlled by operation of the main drive motor 30.

An auxiliary drive motor 42 having an auxiliary output shaft 44 is provided for controlling the inclination (tilt angle) and pivotal movement of the distribution chute 14. The auxiliary drive motor 42 is mounted on the fixed structure 10 and is operationally coupled via second transmission means 46 to a second ring gear 48. This second ring gear 48 is rotatably supported on a stationary cylindrical support 49 by means of a second rolling bearing 50 in such a way that it can rotate about the central axis A independently of the position or movement of the rotary cylindrical body 16. The cylindrical support 49 is attached to the fixed structure 10 and extends down inside the inner chamber 26 coaxially around the feeding spout 12 and the rotary cylindrical body 16. The second transmission means 46 comprise a second drive gearwheel 52 coupled to the auxiliary output shaft 44 by means of a second reduction gear 53, e.g. a self-blocking worm gear. The second drive gearwheel 52 meshes with upper external teeth of the second ring gear 48, indicated at 64, for transmitting torque from the auxiliary drive motor 42 to the second ring gear 48. Accordingly, the auxiliary drive motor 42 directly controls rotation of the second ring gear 48.

For controlling the inclination of the distribution chute 14, the second ring gear 48 is operationally coupled to the distribution chute 14 via third transmission means 54 as described hereinafter. As seen in FIG.1, the third transmission means 54 are supported by the rotary supporting means 15 and arranged inside the inner chamber 26. Accordingly, the third transmission means 54 rotate together with the rotary cylindrical body 16 and the distribution chute 14 about the central rotation axis A. In the embodiment of FIG.1, the third transmission means 54 comprise two epicyclic sun-and-planet gear trains 56 (also called planetary gears) arranged in opposite parts of the inner chamber 26. For conciseness, only one of the two epicyclic sun-and-planet gear trains is described hereinafter. The other sun-and-planet gear train is configured in identical manner.

According to the preferred embodiment shown in FIG.1, the sun-and-planet gear train 56 comprises an input shaft 58, which is provided at a first end with an input gearwheel 60 that meshes with lower external teeth of the second ring gear 48, indicated at 65. The input shaft 58 is rigidly connected at its second end to an annulus 62, which forms the outer ring gear of the sun-and-planet gear train 56. Accordingly, the annulus 62 has internal teeth meshing with at least two planet gears 66 arranged inside the annulus 62 in such a way that the planet gears 66 can roll inside the annulus 62 and revolve about the central axis of the annulus 62. It should be noted that, when the main drive motor 30 causes the rotary supporting means 15 to rotate about the central axis A, the input gearwheel 60 revolves together with the third transmission means 54 about the central rotation axis A.

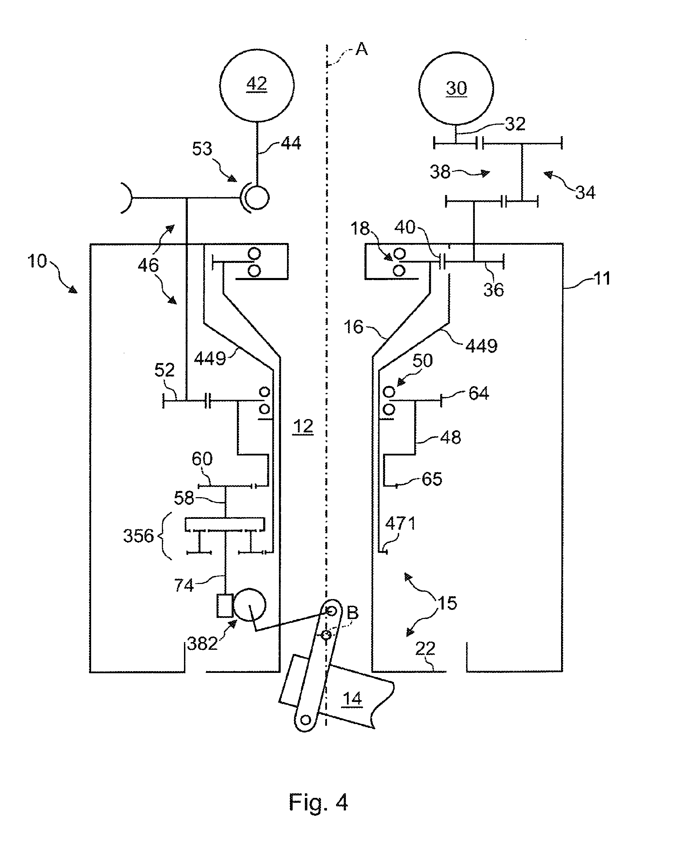

The planet gears 66 are supported on a planet gear carrier 70 via carrier shafts 68 on which the planet gears 66 are rotatably mounted. The carrier 70 is provided with a toothed outer periphery that meshes with external teeth of a stationary third ring gear 71 that is rigidly attached to the fixed structure 10. In the embodiment of FIG.1, the third ring gear 71 is fixed to the feeding spout 12 so as to protrude radially into the inner chamber 26 through a gap 28 between the rotary cylindrical body 16 and the protection flange 22. Alternatively, the third ring gear 71 can be fixed to the cylindrical support 49 as seen in FIG.4, or to the casing 11 and, in the latter case, provided with internal teeth. It should be noted that, when the main drive motor 30 causes the rotary supporting means 15 to rotate about the central axis A, the carrier 70 revolves together with the third transmission means 54 about the central rotation axis A.

In typical manner, the sun-and-planet gear train 56 comprises an inner sun gear 72 arranged in between the planet gears 66 and having external teeth meshing with the planet gears 66 in such a way that the planet gears 66 roll on the external teeth of the sun gear 72 when revolving about the central axis of the annulus 62. According to the preferred embodiment of the invention shown in FIG.1, the sun gear 72 is rigidly connected to an output shaft 74, which passes coaxially through the carrier 70 and is coupled to pivotable mounting means for adjusting the inclination of the distribution chute 14. The pivotable mounting means are of known configuration and arranged on the rotary supporting protection flange 22 as part of the third transmission means 54. For example, as described in US patent N°3,814,403, each pivotable mounting means can comprise a self-blocking worm gear, which includes a threaded spindle 76 and a partial ring gear 78, and a rotatable supporting shaft 80. Each supporting shaft 80 is rotatable about horizontal axis B and rigidly connected to either of two oppositely arranged mounting members (not shown) for removably mounting the distribution chute 14 to the rotary supporting means 15. Accordingly, the inclination of the distribution chute 14 can be adjusted through the output shaft 74 by controlling the rotation of the sun gear 72.

Operation of the drive mechanism is described hereinafter. When the main drive motor 30 causes the rotary supporting means 15 to rotate and provided that the rotational speed of the second ring gear 48 differs from the rotational speed of the rotary supporting means 15, the input gearwheel 60 rolls on the lower external teeth 65 of the second ring gear 48 and thereby imparts rotational motion to the annulus 62. The corresponding rotational speed ω₁ of the annulus 62 about its own axis depends on the gear ratio GR₁ between the toothing of the input gearwheel 60 and the lower teeth 65 of the second ring gear 48. Furthermore, when the main drive motor 30 causes the rotary supporting means 15 to rotate, the carrier 70, which engages the stationary third ring gear 71, is caused to roll on the external teeth of the third ring gear 71 and thereby causes each planet gear 66 to revolve about the central axis of the annulus 62 and to rotate about its own axis, i.e. the axis of its respective carrier shaft 68. The corresponding rotational speed ω₂ of the carrier 70 about its own axis depends on the gear ratio GR₂ between the toothing of the carrier 70 and the third ring gear 71. It will be appreciated that, the drive mechanism is configured in such a way that, when the second ring gear 48 is maintained at rest with respect to the fixed structure 11 and the main drive motor 30 causes the rotary supporting means 15 to rotate, a particular ratio ω₁/ω₂ between the rotational speed ω₁ of the annulus 62 and the rotational speed ω₂ of the carrier 70 is obtained, namely the velocity ratio ω₁/ω₂ at which the sun gear 72 is maintained at rest with respect to the rotary supporting means 15. This is achieved by an appropriate choice of the aforementioned gear ratios GR₁ and GR₂. In other words, when the auxiliary drive motor 42 is stopped, no driving torque is transmitted to the sun gear 72 and thus to the output shaft 74, whereby the distribution chute 14 maintains its pivotal position irrespectively of the actual speed of rotation of the rotary supporting means 15. Conversely, when the auxiliary drive motor 42 causes the second ring gear 48 to rotate, the rotational speed of the annulus 62 is different from ω₁ such that a driving torque is transmitted to the sun gear 72 and thus to the output shaft 74. It follows that the output shaft 74 and the rotatable supporting shaft 80 operationally coupled thereto can be driven by the auxiliary drive motor 42 to pivot the distribution chute 14 about horizontal axis B.

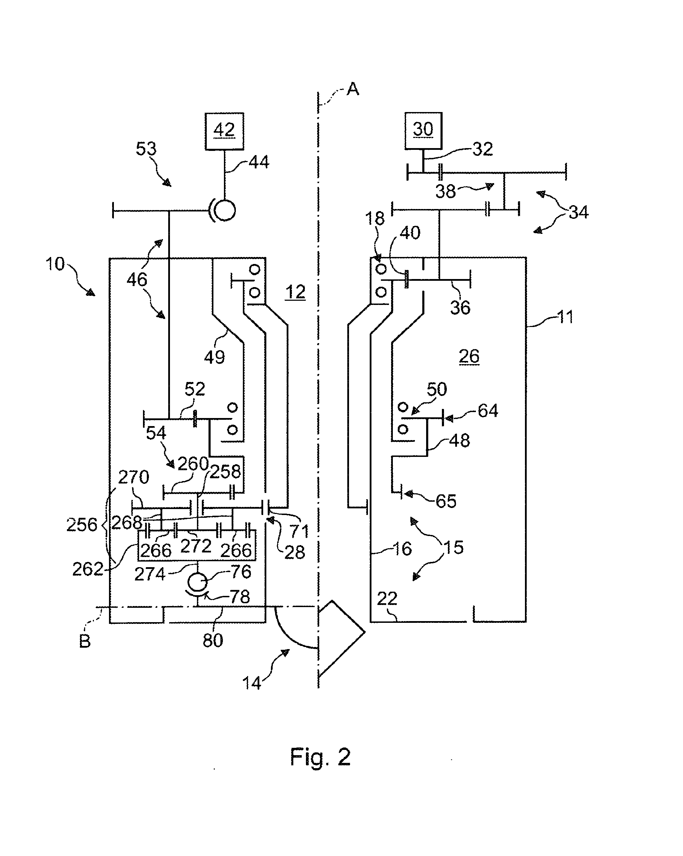

Another embodiment of the invention is illustrated in FIG.2, which shows a similar drive mechanism as in FIG.1, except that the sun-and-planet gear train 256 has a different configuration. Only major differences with respect to the drive mechanism of FIG.1 will be detailed hereinafter. In the embodiment of FIG.2, the input shaft 258 of the sun-and-planet gear train 256 is connected at its lower end to the inner sun gear 272. Accordingly, the sun gear 272 rotates with the input shaft 258 when the input gearwheel 260 rolls on the second ring gear 48 as described above in relation to FIG.1. The annulus 262 is rigidly connected to the output shaft 274 for adjusting the inclination of the distribution chute 14 by pivotable mounting means as described above. As in the embodiment of FIG.1, the carrier 270 supporting the planet gears 266 is configured to roll on the third ring gear 71. Consequently, when the second ring gear 48 is at rest with respect to the fixed structure 10 and the rotary supporting means 15 rotate, a particular velocity ratio ω₃/ω₂ between the rotational speed ω₃ of the sun gear 272 and the rotational speed ω₂ of the carrier 270 is obtained. The drive mechanism of FIG.2, as opposed to that of FIG.1, is configured so that the annulus 262 is maintained at rest with respect to the rotary supporting means 15 at the velocity ratio ω₃/ω₂. Again, this can be achieved by an appropriate choice of the aforementioned gear ratios GR₁ and GR₂. Conversely, when the auxiliary drive motor 42 causes the second ring gear 48 to rotate, the rotational speed of the sun gear 272 differs from ω₃ such that a driving torque is transmitted to the annulus 262 and thus to the output shaft 274. It follows that the output shaft 274 and the rotatable supporting shat 80 operationally coupled thereto can be driven by the auxiliary drive motor 42 to pivot the distribution chute 14 about horizontal axis B.

As will be understood, in case of restrictions concerning the choice of the gear ratios GR₁ and GR₂, the sun gear 72; 272, the planet gears 66; 266 and/or the annulus 62; 262 can be dimensioned in such a way that no driving torque is transmitted to the output shaft 74; 274 when the second ring gear 48 is not driven by the auxiliary drive motor 42.

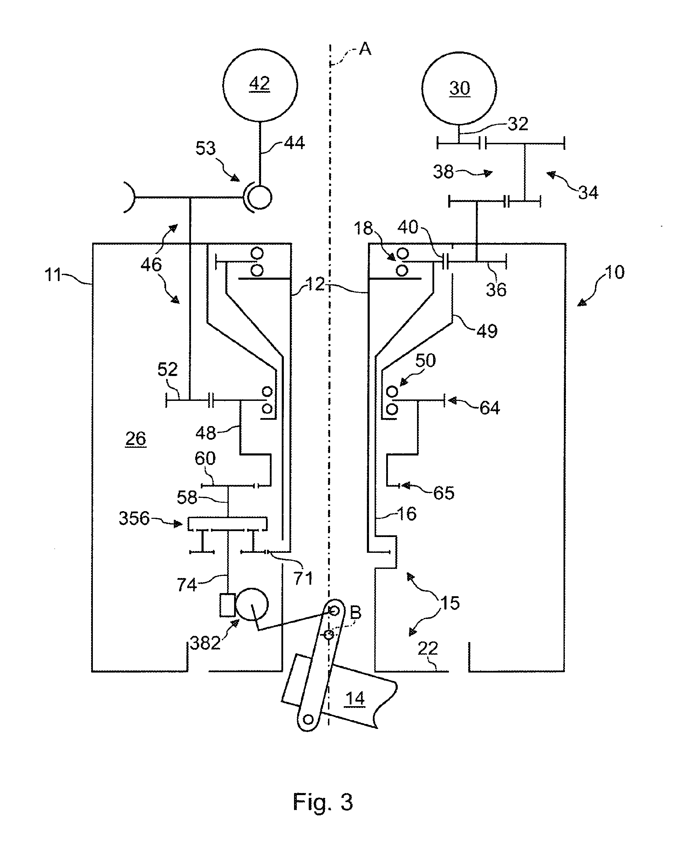

FIG.3 illustrates a third embodiment of the drive mechanism according to the invention. Only major differences with respect to the above-described drive mechanisms will be detailed hereinafter. The drive mechanism of FIG.3 presents a single sun-and-planet gear train 356 supported on the rotary supporting means 15. Whereas its components are dimensioned for higher load, the general configuration of this single sun-and-planet gear train 356 in itself is identical to that of one of the two sun-and-planet gear trains 56 used in the first embodiment as shown in FIG.1. The input shaft 58 is also connected to an input gearwheel 60 that meshes with the lower external teeth of the second ring gear 48. The output shaft 74 of the sun-and-planet gear train 356 is however coupled to a different arrangement for pivoting the distribution chute 14, which is merely schematically illustrated in FIG.3. More specifically, the output shaft 74 is connected to an angular drive as described in US patent 6'916'146, the disclosure of which is incorporated by reference herein. This angular drive is configured to pivot the distribution chute 14 at two diametrically opposite points of application while having a single input drive shaft. Hence the angular drive according to US patent 6,916,146 allows using a single sun-and-planet gear train 356. In order to convert rotation of the output shaft 74 into a pivoting movement of the distribution chute 14, the angular drive comprises a crank and connecting rod mechanism, schematically indicated at 382 in FIG.3. The crank and connecting rod mechanism 382 has two opposite control levers for pivoting the distribution chute 14 about the horizontal pivoting axis B. Further details of the angular drive used in the embodiment of FIG.3 are found in US patent 6'916'146.

FIG.4 illustrates a fourth embodiment of the drive mechanism according to the invention. The embodiment of FIG.4 is generally identical to that of FIG.3 except that the cylindrical support 449, which supports the second ring gear 48 through the rolling bearing 50, has a different design and that the third ring gear 471 is rigidly fixed to the lower end of this cylindrical support 449. Accordingly when compared to FIG.3, the cylindrical support 449 extends further downward around the rotary cylindrical body 16 inside the casing 11 to support the third ring gear 471.

As will be understood, in principle any of the three main components of the sun-and-planet gear train, i.e. the annulus, the planet gear carrier and the sun gear can be connected to the input shaft, the output shaft or the third ring gear respectively. It will also be understood that the present invention is not limited in its application to a shaft furnace charging installation of the type as generally known from US Patent 3,693,812, i.e. a charging installation providing rotation and pivoting of a distribution chute about two perpendicular axes. For example, a drive mechanism configured as described hereinbefore may also be used for improving an installation of the type as disclosed in Japanese patent application JP 63 096 205. More specifically, a single sun-and-planet gear train configured as set out above in relation to FIG.3 may be employed for rotating the lower rotary chute of a two-part chute according to JP 63 096 205.

### List of reference signs:

- A: central rotation axis
- B: horizontal pivoting axis
- 10: fixed structure
- 11: fixed external casing
- 12: feeding spout
- 14: distribution chute
- 15: rotary supporting means
- 16: rotary cylindrical body
- 18: first rolling bearing
- 22: protection flange
- 26: inner chamber
- 28: gap
- 30: main drive motor
- 32: main output shaft
- 34: first transmission means
- 36: first drive gearwheel
- 38: first reduction gear
- 40: first ring gear
- 42: auxiliary drive motor
- 44: auxiliary output shaft
- 46: second transmission means
- 48: second ring gear
- 49; 449: cylindrical support
- 50: second rolling bearing
- 52: second drive gearwheel
- 53: second reduction gear
- 54: third transmission means
- 56, 256; 356: sun-and-planet gear train
- 58, 258: input shaft
- 60, 260: input gearwheel
- 62, 262: annulus
- 64: upper external teeth of the second ring gear
- 65: lower external teeth of the second ring gear
- 66, 266: planet gear
- 68: carrier shaft
- 70, 270: carrier
- 71; 471: third ring gear
- 72, 272: sun gear
- 74, 274: output shaft
- 76: threaded spindle
- 78: partial ring gear
- 80: rotatable supporting shaft
- 382: crank and connecting rod mechanism

## Claims

1. A shaft furnace charging installation having a drive mechanism for a distribution chute (14), said drive mechanism comprising:
rotary supporting means (15) for supporting the distribution chute (14); a fixed structure (10) for rotatably supporting said rotary supporting means (15); a main drive motor (30) and an auxiliary drive motor (42) mounted on said fixed structure (10);
first transmission means (34) operationally coupling said main drive motor (30) to a first ring gear (40) rigidly connected to said rotary supporting means (15) for imparting rotational motion to said rotary supporting means (15) about an axis of rotation (A); second transmission (46) means operationally coupling said auxiliary drive motor (42) to a second ring gear (48) that is independently rotatable about said axis of rotation (A) third transmission means (54) supported by said rotary supporting means (15) and operationally coupling said second ring gear (48) to the distribution chute (14) for adjusting the position of the distribution chute (14);
**characterized in that**
said third transmission means (54) comprise at least one epicyclic sun-and-planet gear train (56, 256, 356) that is supported by said rotary supporting means (15) and has:
an input shaft (58, 258) arranged on said rotary supporting means (15) and to be driven by said second ring gear (48), and
an output shaft (74, 274) arranged on said rotary supporting means (15) and to adjust the position of the distribution chute (14);
and **in that** said sun-and-planet gear train (56, 256, 356) is operationally coupled to a third ring gear rigidly connected to said fixed structure (10).

2. The shaft furnace charging installation according to claim 1, wherein said sun-and-planet gear (56, 256, 356) train comprises an annulus (62,263), a sun gear (72, 272) and a planet gear carrier (70, 270) that meshes with said third ring gear.

3. The shaft furnace charging installation according to claim 2, wherein said annulus (62, 262) is connected to said input shaft (58, 258) and wherein said sun gear (72, 272) is connected to said output shaft (74,274).

4. The shaft furnace charging installation according to claim 3, wherein said input shaft (58, 258) is connected to an input gearwheel (60, 260) that meshes with the second ring gear (48).

5. The shaft furnace charging installation according to claim 4, wherein the gear ratio between said input gearwheel (60, 260) and said second ring gear (48) and the gear ratio between said planet gear carrier (70, 270) and said third ring gear (71, 471) are respectively selected such that said sun gear (72, 272) remains stationary with respect to said rotary supporting means if said rotary supporting means (15) rotates while said second ring gear (48) remains stationary with respect to said fixed structure (10).

6. The shaft furnace charging installation according to any one of claims 1 to 5, wherein said third transmission means (54) comprise:
a pair of oppositely arranged pivotable mounting means arranged on said rotary supporting means (15) and configured to pivotally support the distribution chute (14) for pivoting the distribution chute (14) about a pivoting axis (B) that is perpendicular to the axis (A) of rotation of said rotary supporting means (15).

7. The shaft furnace charging installation according to claim 6, wherein said third transmission means (54) comprises:
a pair of sun-and-planet gear trains (56, 256, 356) supported by said rotary supporting means, the output shaft (74, 274) of each sun-and-planet gear train (56, 256, 356) being operationally coupled to either of said pivotable mounting means.

8. The shaft furnace charging installation according to claim 7, wherein the output shaft of each sun-and-planet gear train (56, 256, 356) is operationally coupled to either of said pivotable mounting means by means of a self-blocking gear arrangement so that said chute (14) maintains its pivoting position when said output shaft (74, 274) is not that said chute maintains its pivoting position when said output shaft is not transmitting torque.

9. The shaft furnace charging installation according to any one of claims 1 to 5, wherein said third transmission (54) means comprises:
an angular drive arrangement that comprises a drive shaft and a crank and connecting rod mechanism with two opposite control levers for pivoting the distribution chute (14) about a pivoting axis (B) that is perpendicular to the axis of rotation (A) of said rotary supporting means (15), said angular drive arrangement being configured to convert rotation of said drive shaft into a pivoting movement of the distribution chute (14); and
a single sun-and-planet gear train (56, 256, 356) supported by said rotary supporting means (15), the output shaft (74, 274) of said sun-and-planet gear train being (56, 256, 356) operationally coupled said drive shaft.

10. The shaft furnace charging installation according to any one of claims 1 to 9, wherein said second transmission means (46) comprise a self-blocking gear arrangement so that said second ring gear (48) remains, stationary with respect to said fixed structure (10) when said auxiliary drive motor (42) is not in operation.

11. The shaft furnace charging installation according to any one of claims 1 to 10, wherein said second ring gear (48) is rotatably supported on a stationary cylindrical support (49, 449) that is attached to said fixed structured (10).

12. The shaft furnace charging installation according to claim 11, wherein said stationary cylindrical support (49, 449) extends around said rotary supporting means (15) and said third ring gear (71, 471) is rigidly connected to said cylindrical support (49, 449).

13. A shaft furnace, in particular a blast furnace, comprising a charging installation according to any one of the preceding claims.

## Patentansprüche

1. Eine Beschickungseinrichtung für einen Schachtofen mit einem Antriebsmechanismus für eine Verteilungsschurre (14), wobei der Antriebsmechanismus aufweist:
drehbare Tragemittel (15) zum Tragen der Verteilungsschurre (14);
eine feste Struktur (10) zum drehbaren Tragen der drehbaren Tragemittel (15);
einen Hauptantriebsmotor (30) und einen Hilfsantriebsmotor (42), die auf der festen Struktur (10) angebracht sind;
erste Übertragungsmittel (34), die den Hauptantriebsmotor (30) funktionsfähig an ein erstes Hohlrad (40) koppeln, das starr mit den drehbaren Tragemitteln (15) verbunden ist, um den drehbaren Tragemitteln (15) eine Drehbewegung um eine Drehachse (A) zu verleihen;
zweite Übertragungsmittel (46), die den Hilfsantriebsmotor (42) funktionsfähig mit einem zweiten Hohlrad (48) koppeln, das unabhängig um die Drehachse (A) drehbar ist,
dritte Übertragungsmittel (54), die von den drehbaren Tragemitteln (15) getragen werden und das zweite Hohlrad (48) funktionsfähig mit der Verteilungsschurre (14) koppeln, um die Position der Verteilungsschurre (14) einzustellen;
**dadurch gekennzeichnet, dass**
die dritten Übertragungsmittel (54) mindestens einen Planetengetriebezug (56, 256, 356) aufweisen, der von den drehbaren Tragemitteln (15) getragen wird und folgendes aufweist:
eine Antriebswelle (58, 258), die auf den drehbaren Tragemitteln (15) angeordnet ist und von dem zweiten Hohlrad (48) angetrieben wird, und
eine Abtriebswelle (74, 274), die auf den drehbaren Tragemitteln (15) angeordnet ist und die Position der Verteilungsschurre (14) einstellt;
und dass der Planetengetriebezug (56, 256, 356) funktionsfähig an ein drittes Hohlrad (40) gekoppelt ist, das starr mit der festen Struktur (10) verbunden ist.

2. Beschickungseinrichtung für einen Schachtofen nach Anspruch 1, wobei der Planetengetriebezug (56, 256, 356) ein Außenrand (62, 262), ein Sonnenrad (72, 272) und einen Planetenradträger (70, 270) aufweist, der mit dem dritten Hohlrad (40) kämmt.

3. Beschickungseinrichtung für einen Schachtofen nach Anspruch 2, wobei das Außenrad (62, 262) mit der Antriebswelle (58, 258) verbunden ist und wobei das Sonnenrad (72, 272) mit der Abtriebswelle (74, 274) verbunden ist.

4. Beschickungseinrichtung für einen Schachtofen nach Anspruch 3, wobei die Antriebswelle (58, 258) mit einem Antriebsrad (60, 260) verbunden ist, das mit dem zweiten Hohlrad (48) kämmt.

5. Beschickungseinrichtung für einen Schachtofen nach Anspruch 4, wobei das Übersetzungsverhältnis zwischen dem Antriebsrad (60, 260) und dem zweiten Hohlrad (48) und das Übersetzungsverhältnis zwischen dem Planetenradträger (70, 270) und dem dritten Hohlrad (71, 471) jeweils so ausgewählt sind, dass das Sonnenrad (72, 272) in Bezug auf die drehbaren Tragemittel ortsfest bleibt, wenn sich die drehbaren Tragemittel (15) drehen, während das zweite Hohlrad (48) in Bezug auf die feste Struktur (10) ortsfest bleibt.

6. Beschickungseinrichtung für einen Schachtofen nach einem der Ansprüche 1 bis 5, wobei die dritten Übertragungsmittel (54) aufweisen:
ein Paar von gegenüber angeordneten schwenkbaren Montagemitteln, die auf den drehbaren Tragemitteln (15) angeordnet und dafür konfiguriert sind, die Verteilungsschurre (14) schwenkbar zu tragen, um die Verteilungsschurre (14) um eine Schwenkachse (B) zu verschwenken, die senkrecht zur Drehachse (A) der Tragemittel (15) steht.

7. Beschickungseinrichtung für einen Schachtofen nach Anspruch 6, wobei die dritten Übertragungsmittel (54) aufweisen:
ein Paar von Planetengetriebezügen (56, 256, 356), die von den drehbaren Tragemitteln (15) getragen werden, wobei die Abtriebswelle (74, 274) jedes Planetengetriebezugs (56, 256, 356) funktionsfähig an jede der drehbaren schwenkbaren Montagemittel gekoppelt ist.

8. Beschickungseinrichtung für einen Schachtofen nach Anspruch 7, wobei die Abtriebswelle jedes Planetengetriebezugs (56, 256, 356) über eine selbstsperrende Getriebeanordnung funktionsfähig mit jeden der schwenkbaren Montagemitteln gekoppelt ist, so dass die Schurre (14) ihre Schwenkposition beibehält, wenn die Abtriebswelle (74, 274) kein Drehmoment überträgt.

9. Beschickungseinrichtung für einen Schachtofen nach einem der Ansprüche 1 bis 5, wobei die dritten Übertragungsmittel (54) aufweisen:
eine Winkelantriebsanordnung, die eine Antriebswelle und einen Kurbel-Pleuel-Mechanismus mit zwei gegenüberliegenden Steuerhebeln zum Schwenken der Verteilungsschurre (14) um eine Drehachse (B), die senkrecht zur Drehachse (A) den drehbaren Tragemittein (15) steht, aufweist, wobei die Winkelantriebsanordnung so konfiguriert ist, dass sie eine Drehung der Antriebswelle in eine Schwenkbewegung der Verteilungsschurre (14) umwandelt; und
einen einzigen Planetengetriebezug (56, 256, 356), der von den drehbaren Tragemitteln (15) getragen wird, wobei die Abtriebswelle (74, 274) des Planetengetriebezugs (56, 256, 356) funktionsfähig mit der Antriebswelle gekoppelt ist.

10. Beschickungseinrichtung für einen Schachtofen nach einem der Ansprüche 1 bis 9, wobei die zweiten Übertragungsmittel (46) eine selbstsperrende Getriebeanordnung aufweisen, so dass das zweite Hohlrad (48) in Bezug auf die feste Struktur (10) ortsfest bleibt, wenn der Hilfsantriebsmotor (42) nicht in Betrieb ist.

11. Beschickungseinrichtung für einen Schachtofen nach einem der Ansprüche 1 bis 10, wobei das zweite Hohlrad (48) drehbar auf einem ortsfesten zylindrischen Träger (49, 449) getragen ist, der an der festen Struktur (10) angebracht ist.

12. Beschickungseinrichtung für einen Schachtofen nach Anspruch 11, wobei sich der ortsfeste zylindrische Träger (49, 449) um die drehbaren Tragemittel (15) erstreckt und das dritte Hohlrad (71, 471) mit dem zylindrischen Träger (49, 449) starr verbunden ist.

13. Schachtofen, insbesondere Hochofen, aufweisend eine Beschickungseinrichtung nach einem der vorhergehenden Ansprüche.

## Revendications

1. Installation de chargement de four à cuve ayant un mécanisme d'entraînement pour une goulotte de distribution (14), ledit mécanisme d'entraînement comprenant :
un moyen de support rotatif (15) pour supporter la goulotte de distribution (14) ;
une structure fixe (10) pour supporter en rotation ledit moyen de support rotatif (15) ;
un moteur d'entraînement principal (30) et un moteur d'entraînement auxiliaire (42) montés sur ladite structure fixe (10);
un premier moyen de transmission (34) couplant opérationnellement ledit moteur d'entraînement principal (30) à une première couronne dentée (40) connectée de façon rigide audit moyen de support rotatif (15) pour impartir un mouvement rotatif audit moyen de support rotatif (15) autour d'un axe de rotation (A) ;
un deuxième moyen de transmission (46) couplant opérationnellement ledit moteur d'entraînement auxiliaire (42) à une deuxième couronne dentée (48) qui est indépendamment rotative autour dudit axe de rotation (A);
un troisième moyen de transmission (54) supporté par ledit moyen de support rotatif (15) et couplant opérationnellement ladite deuxième couronne dentée (48) à la goulotte de distribution (14) pour ajuster la position de la goulotte de distribution (14);
**caractérisée en ce que**
ledit troisième moyen de transmission (54) comprend au moins un train d'engrenages planétaire épicycloïdal (56, 256, 356) qui est supporté par ledit moyen de support rotatif (15) et a :
un arbre d'entrée agencé (58, 258) sur ledit moyen de support rotatif (15) et destiné à être entraîné par ladite deuxième couronne dentée (48), et
un arbre de sortie agencé (74, 274) sur ledit moyen de support rotatif (15) et pour ajuster la position de la goulotte de distribution (14);
et **en ce que** ledit train d'engrenages planétaire (56, 256, 356) est opérationnellement couplé à une troisième couronne dentée (40) connectée de façon rigide à ladite structure fixe (10),

2. Installation de chargement de four à cuve selon la revendication 1, dans laquelle ledit train d'engrenages planétaire (56, 256, 356) comprend un anneau (62, 267), un pignon solaire (72, 272) et un support de satellites (70, 270) qui s'engrène avec ladite troisième couronne dentée (40),

3. Installation de chargement de four à cuve selon la revendication 2, dans laquelle ledit anneau (62, 262) est connecté audit arbre d'entrée (58, 258) et dans laquelle ledit pignon solaire (72, 272) est connecté audit arbre de sortie (74, 274).

4. Installation de chargement de four à cuve selon la revendication 3, dans laquelle ledit arbre d'entrée (58, 258) est connecté à une roue dentée d'entrée (60, 260) qui s'engrène avec la deuxième couronne dentée (48).

5. Installation de chargement de four à cuve selon la revendication 4, dans laquelle le rapport d'engrenage (60, 260) entre ladite roue dentée d'entrée (48) et ladite deuxième couronne dentée et le rapport d'engrenage entre ledit support de satellites (70, 270) et ladite troisième couronne dentée (71, 471) sont respectivement choisis de telle façon que ledit pignon solaire (72, 272) reste stationnaire par rapport à ladite structure rotative si ledit moyen de support rotatif (15) tourne tandis que ladite deuxième couronne dentée (48) reste stationnaire par rapport à ladite structure fixe (10).

6. Installation de chargement de four à cuve selon l'une quelconque des revendications 1 à 5, dans laquelle ledit troisième moyen de transmission (54) comprend :
une paire de moyens de montage pivotants agencés de façon opposée agencés sur ledit moyen de support rotatif (15) et configurés pour supporter en pivot la goulotte de distribution (14) pour faire pivoter la goulotte de distribution (14) autour d'un axe de pivotement (B) qui est perpendiculaire à l'axe de rotation (A) dudit moyen de support rotatif (15).

7. Installation de chargement de four à cuve selon la revendication 6, dans laquelle ledit troisième moyen de transmission (54) comprend :
une paire de trains d'engrenages planétaires (56, 256, 356) supportés par ledit moyen de support rotatif (15), l'arbre de sortie (74, 274) de chaque train d'engrenages planétaire (56, 256, 356) étant opérationnellement couplé à l'un desdits moyens de montage pivotants.

8. Installation de chargement de four à cuve selon la revendication 7, dans laquelle l'arbre de sortie de chaque train d'engrenages planétaire (56, 256, 356) est opérationnellement couplé à l'un desdits moyens de montage pivotants au moyen d'un agencement de roues dentées autobloquant de sorte que ladite goulotte (14) maintient sa position de pivotement lorsque ledit arbre de sortie (74, 274) ne transmet pas de couple.

9. Installation de chargement de four à cuve selon l'une quelconque des revendications 1 à 5, dans laquelle ledit troisième moyen de transmission (54) comprend :
un agencement d'entraînement angulaire qui comprend un arbre d'entraînement et un bras de manivelle et un mécanisme de tiges de connexion avec deux leviers de commande opposés pour faire pivoter la goulotte de distribution (14) autour d'un axe de pivotement (B) qui est perpendiculaire à l'axe de rotation (A) dudit moyen de support rotatif (15), ledit agencement d'entraînement angulaire étant configuré pour convertir la rotation dudit arbre d'entraînement en un mouvement de pivotement de la goulotte de distribution (14) ; et
un train d'engrenages planétaire (56, 256, 356) unique supporté par ledit moyen de support rotatif (15) , l'arbre de sortie (74, 274) dudit train d'engrenages planétaire (56, 256, 356) étant opérationnellement couplé avec ledit arbre d'entraînement.

10. Installation de chargement de four à cuve selon l'une quelconque des revendications 1 à 9, dans laquelle ledit deuxième moyen de transmission (46) comprend un agencement de roues dentées autobloquant de sorte que ladite deuxième couronne dentée (48) reste stationnaire par rapport à ladite structure fixe (10) lorsque ledit moteur d'entraînement auxiliaire (42) n'est pas en opération.

11. Installation de chargement de four à cuve selon l'une quelconque des revendications 1 à 10, dans laquelle ladite deuxième couronne dentée (48) est supportée de façon rotative sur un support cylindrique stationnaire (49, 449) qui est fixé à ladite structure fixe (10).

12. Installation de chargement de four à cuve selon la revendication 11, dans laquelle ledit support cylindrique stationnaire (49, 449) s'étend autour dudit moyen de support rotatif (15) et ladite troisième couronne dentée (71, 471) est connectée de façon rigide audit support cylindrique (49, 449).

13. Four à cuve, en particulier haut-fourneau, comprenant une installation de chargement selon l'une quelconque des revendications précédentes.
